# EUROPEAN PATENT APPLICATION

(11) **EP 0 859 385 A1**
(43) Date of publication of application: **19.08.1998**
(21) Application number: 97870021.9
(22) Date of filing: 17.02.1997
(51) Int. Cl.: H01G 9/20

(54) **Method for the manufacture of photovoltaic cell**

(71) Applicant: MONSANTO COMPANY, St. Louis, Missouri 63167 (US)
(72) Inventor: The designation of the inventor has not yet been filed
(74) Representative: Bosch, Henry

(57) **Abstract**

The technology of this invention relates to a commercially attractive manufacturing method for photoelectrochemical cells. In essence, a photovoltaic ink suspension, containing essentially polycrystalline semi-conductor dye coated particles, a hydrolyzable semi-conductor precursor alkoxide and an inert solvent, is applied to a conductor area followed by in situ treatment of the ink to yield a semi-conductor effective layer for use in a photovoltaic cell.

## Description

The technology of this patent application relates to a method for the manufacture of a photovoltaic cell which can be used for converting incident light into electrical energy. The method basically comprises applying a photovoltaic ink consisting essentially of a suspension of the dye-coated particles of the semi-conductor functional layer, a hydrolyzable semi-conductor precursor, such as a hydrolyzable metal alkoxide, and an inert, in relation to the metal alkoxide, solvent, is applied to a substrate provided with conductor patterns, to thereby generate under temperature conditions not exceeding 180 C°, a semiconductor functional layer for use in a regenerative photovoltaic cell.

The prior art relating to regenerative photovoltaic cells is crowded and diverse and is possessed, in addition to detailed proposals concerning mechanisms underlying the conversion of light to electrical energy, of methods for the manufacture of such cells, particularly the semi-conductor functional part, which relays and regulates the transport of photoexcited electrons from the chromophore dye to the anode conductor. EP-A-0 333 641 describes photo-electrochemical cells having a polycrystalline metal oxide semi-conductor with a monomolecular chromophore layer in its surface region. At least one of the electrodes shall be transparent to the incident light. The cells are of the dual substrate "sandwich-type" configuration having oppositely charged current collectors attached to distinct substrates. The semi-conductor part is provided with sintered (electrically conductive) nano-cells, such as TiO₂. The cells are made by depositing sequentially minimal amounts of semi-conductor precursors followed by high temperature sintering after each deposition of precursor
Kavan et al., J. of The Electrochemical Society, February 1996, pages 394-400, have reported that sintering can reduce the (BET) surface area of nanocrystalline TiO₂ and henceforth its photoelectrochemical conversion functionality. Péchy et al., J. Chem. Soc., Chem. Commun., 1995, pages 65-66, describe the preparation of phosphonated polypyridyl ligands which are reported to exhibit excellent charge-transfer sensitizer properties for nanocrystalline TiO₂ film application. These characteristics render the phosphonated polypyridyl ligands particularly attractive for application in molecular photovoltaic devices.

Hanprasopwattana et al., Langmuir 1996, 12, 3173-3179, describe methods of uniformly distributing monolayer to multilayer films of titania on mono-disperse silica spheres. The titania coatings so deposited are amorphous. Heating to temperatures around 500°C is needed to convert the amorphous coating into polycrystalline TiO₂. Kay et al., The Journal of Physical Chemistry 1996, Vol. 98, pages 952-959, report on the mechanism of photosensitization of transparent TiO₂ electrodes with chlorophyll derivatives, particularly induced photocurrent phenomena. Grätzel et al., Current Science, Vol. 66, No. 10, 25 May 1994, describe properties and requirements of efficient dye-sensitized photoelectrochemical cells for direct conversion of visible light to current. The authors conclude that actual cell technology (at the date of the paper) is not sufficient and cannot lead to commercially viable executions. McEvoy et al., Solar Energy Materials and Solar Cells 32 (1994) 221-227, summarize general principles and the historical development sequence concerning photovoltaic technologies.
While substantial efforts were invested towards providing economically acceptable manufacturing technology for photoelectrochemical cells, these developments efforts have not yielded, as of yet, acceptable solutions, in particular meaningful improvements to current photovoltaic cell making technology.
It is therefore a main object of this invention to make available a simplified and reliable method for the manufacture of photovoltaic cells. It is a further object of this invention to generate a method for the manufacture of photovoltaic cells whereby the semi-conductor functional layer can be produced/deposited in a relatively simple arrangement without a need for using extreme, possibly repetitive, conditions such as sintering temperatures. It is still another object of this invention to provide a high speed, as compared to previous methods, manufacturing process for photovoltaic cells. Yet another object of this invention aims at economically producing semi-conductor functional layers for use in photovoltaic cells. It is still another object of this invention to provide a method for the manufacture of photovoltaic cells which does nor require extreme conditions of temperature and/or elaborate control of the surrounding atmosphere. The foregoing and other objects of this invention can now be met beneficially with the aid of the manufacturing arrangement of this invention.

This invention, in part, relates to a method for the manufacture of regenerative photovoltaic cells containing substrates, current collectors and dye-coated semi-conductor functional layer, wherein a photovoltaic ink consisting essentially of a suspension of agglomerates of the dye-coated semi-conductor functional particles, a hydrolyzable semiconductor precursor, and an inert solvent, is applied to a conductor functional substrate e.g. a substrate provided with conductor patterns to thereby generate under temperature conditions not exceeding 180 °C, a semi-conductor functional layer.
The semi-conductor particle in the dye-coated particles capable of exhibiting semi-conductor functionality can preferably be represented by polycrystalline metal oxides of titanium, zirconium, hafnium, strontium, zinc, indium, tin, antimony, yttrium, lanthanum, vanadium, niobium, tantalum, chromium, molybdenum, tungsten, iron, nickel, silver and mixtures of such metal oxides. The metal in the metal alkoxides can be selected from the preferred metals which can be used in the polycrystalline semi) conductor metal oxides. The ink can, in addition to the essential metal alkoxide, contain, as an optional ingredient, a non-semi-conductor metal, or non-metal, alkoxide selected from silicium, aluminum, germanium and boron in a level of from 0.1% to 20% expressed in relation to the essential metal alkoxide component (100%). The solvent is inert in relation to the metal alkoxide component. The photovoltaic ink is deposited onto the substrate to thus provide ohmic contact between the anode conductor and the photovoltaic layer. The ink can be applied to the conductor-substrate by methods generally known inclusive of printing and other deposition methods.
The terms "photovoltaic cell" and photoelectrical cell are used interchangeably. Percent indications stand, unless specified differently, for "% by weight".
The method herein can serve for the manufacture of photovoltaic cells generally. Examples of such cells embrace conventional dual substrate "sandwich-type" cells as e.g. known from EP-A-0 333 641 and single substrate cells as e.g. known from EP-A-97870011.1, entitled "Photovoltaic Cell", filed January 30, 1997. Photovoltaic cells manufactured in accordance with the method herein generally comprise a substrate or substrates, current collectors and a semi-conductor functional layer resulting from the application of a photovoltaic ink to a substrate provided with conductor patterns to thereby generate under temperature conditions not exceeding 180 °C a semi-conductor functional layer.
The photovoltaic ink consists essentially of a suspension of agglomerates of the dye-coated particles of the semi-conductor functional layer, a hydrolyzable metal alkoxide and an inert solvent. The suspension is a physical mixture of the essential ingredients. The suspension has to be stable i.e. the particles should not settle or otherwise precipitate from the suspension within the time period generally required for the application.
The suspension shall be stable, under ambient conditions of temperature, pressure and humidity, for a period of, at least, one hour, preferably at least 4 hours, more preferably at least one week.
The suspension shall have a viscosity that is compatible with the particulars of the selected application, usually printing, such as screen printing, or deposition by means of adequate tools including roll deposition or deposition with a doctor blade. The viscosity will vary depending upon the level and the particle size of the dye-coated metal oxide particles. The presence of optional performance additives in the ink can also affect, possibly in a significant manner, the viscosity. The viscosity of the photovoltaic ink herein is generally within the range of from 1 to 100 000 P (Poises), frequently within the range of from 100 to 40 000 P. The viscosity of any given ink can be adjusted thereby taking into consideration the particular requirements, generally known in the relevant domain, of the selected method of application. The viscosity is measured under standard conditions at a temperature of 25 (+/-2) °C. While the ink, in a concentrated form, can contain up to 50% of the coated metal oxide particles, these particles usually represent from 5% to 35%, preferably from 8% to 25%, more preferably from 8% to 18%, expressed in relation to the sum of dye-coated metal oxide particles + hydrolyzable metal oxide + solvent (100%)
The dye-coated particles can be represented by polycrystalline metal oxide particles, capable of exhibiting, within the framework of the photovoltaic cell herein, effective semiconductor properties. The metal component of the polycrystalline oxide particles can be selected from transition metals, or from elements selected from the fourth, fifth or sixth group or subgroup of the periodic system of elements, in particular titanium, zirconium, hafnium, strontium, zinc, indium, tin, antimony , yttrium, lanthanum, vanadium, niobium, tantalum, chromium, molybdenum, tungsten, iron, nickel, silver or mixtures of two or more of these metal oxides. The polycrystalline metal oxide particles, having semi-conductor properties, are coated with a monomolecular layer of a chromophore capable of ejecting an electron upon exposure to incident light which electron will be relayed by the semi-conductor to the conductor. The metal oxide particles have an average particle diameter of from 1 nm to 200 nms, preferably from 10 nms to 50 nms. The metal oxide particles can, and frequently do, form agglomerates having a diameter in the range of from 100 nms to 1 mm.
The polycrystalline metal oxide particles can be prepared by methods generally known in the art. For example, the particles can be prepared by hydrolysis of the corresponding metal (or metalloid) alkoxides, chlorides or bromides followed by optional physical treatments such as growth and particle size control through digestion under hydrothermal conditions at temperatures in the range of from 150 to 250 °C, followed by high temperature (200-500°C) sintering and grinding of the resulting sintered product to the required particle size. The chromophore dye will be applied to the particulate metal-oxide product by soaking or spraying an aqueous solution, or more preferably an organic solvent solution, of the chromophore dye. The excess dye (not adsorbed or chemisorbed or otherwise reacted with the semiconductor surface) can be rinsed off. Chromophore dyes which can be used in connection with the cell manufactured in accordance with the method herein are eminently well known in the technical community. Examples of suitable chromophore dyes for use in this invention are disclosed in EP-A-97870011.1, page 7, lines 16-29. The dye can optionally be used under polymeric form i.e. included as pendant groups or as monomeric units in a polymer chain to thus improve the stability of the chromophore layer. Examples of the chromophore dye in polymeric configuration for use herein are described in JP-A-85196467 to Rykagaku Kenkyusho.
The hydrolyzable semi-conductor precursor is usually represented by hydrolyzable metal alkoxides wherein the metal moiety is selected among the metals of the inventive polycrystalline metal oxides exhibiting semi-conductor functionality. Preferred metals, for use in the hydrolyzable alkoxides herein, belong to groups IIb, IVb, Vb, VIb, IIIa, IVa and Va of the Mendeleev table of elements. The preparation of the alkoxides is well known in the technical community. In fact, the majority, if not all, of the metal alkoxides for use herein are known and commercially available materials. The alkoxide moiety can be represented by species having, for example, from 1-10 carbon atoms. Specific examples of the like alkoxides include methoxide, ethoxide, propoxide, isopropoxide, butoxide a.s.o. The hydrolyzable metal alkoxides, which correspond to the hydrolyzable semi-conductor precursor, are generally employed in levels ranging from 0.1% to 15%, preferably 0.2% to 10%, expressed on the same basis as the dye-coated metal oxide particles. In a preferred embodiment, it can be beneficial to incorporate, in addition to the hydrolyzable semi-conductor precursor, a low level such as from 10⁻⁶% to 10%, expressed in relation to the hydrolyzable semi-precursor metal alkoxide (100%), of a further (non semi-conductor) metal alkoxide selected from silicium, aluminum, germanium, and boron.
The inert solvent is generally used in levels ranging from 6% to 85%, preferably from 10% to 80%, expressed on the same level as the metal oxide particles. The term inert means that the solvent is not capable of reacting with the metal or metalloid alkoxides present in the ink suspension under ambient (20 °C) storage conditions for a period of 6 months. Examples of suitable solvents include straight and branched alkanes having from 8 to 20 carbon atoms, aromatic alkylates having from 4 to 12 carbon atoms in the straight or branched alkyl chain, ethers or ketones having from 8 to 24 carbon atoms and blends thereof.
The ink suspension can further contain additive levels i.e. 0.1% to 2.0%, of various optional performance and compatibilizing agents which are used for their known functionality. Such additives can serve to enhance the functionality of any one of the essential ternary ingredients in the ink suspension. Examples of the like additives can be represented by dispersants which can enhance the even distribution of the ink particles on the substrate.
The suspension shall be distributed onto the substrate provided with conductive patterns by methods generally known inclusive of printing, roll deposition or deposition with a doctor blade to thereby yield a uniform layer of ink. The so deposited layer of the precursor ink will be treated under mild and non-destructive conditions including temperatures below 180 °C, preferably below 150 °C, possibly combined with non destructive pressures e.g. below 20 bars, and/or evaporation under subatmospheric pressures. So proceeding will yield an effective semi-conductor functional grid which can control and promote the transport of electrons originating from the chromophore dye to the conductive layer. The actual and combined optimization of physical conditions required for converting the ink suspension into an effective semi-conductor grid are routine measures. In a preferred execution, the support of the deposited layer has a conductivity of than 10 ohm per square to achieve an appropriate and beneficial level of photochemical performance.
In a preferred embodiment, the core of the aggregates of the dye-coated particles can be represented by inactive metal oxides particles such as alumina and silica provided, of course, that such inactive core is coated with a semi-conductor functional layer comprising a metal oxide semi-conductor wherein the metal is selected from titanium, zirconium, hafnium, strontium, zinc, indium, yttrium, lanthanum, vanadium, niobium, tantalum, chrome cadmium, antimony, tin, molybdenum, tungsten and mixtures of two or more of these metal oxides. The term "inactive" as used in that context means that the particular metal oxide e.g. silica and/or alumina does not exhibit semi-conductor properties upon use in a photovoltaic cell manufactured in accordance with the method of this invention. The from a semi-conductor standpoint inactive core can represent up to 80%, preferably up to 60% of the aggregates of dye-coated particles.
The substrate for use in the cell manufactured in accordance with this invention can be represented by conventional substrate materials. Such materials can be selected from flexible or rigid, mineral or organic materials, such as synthetic and natural polymers and combinations thereof, paper, wood, glass, aluminum, tin, nickel, iron, zinc, copper, cloth, fibers and mixtures thereof.
In another execution of the cell made by the method herein, a minor proportion of semi-conductor particles is embedded into the anode conductor. Preferably from 1% to 10% by weight, expressed versus the conductive material (100%), of the said semi-conductor particles are embedded into the conductive material layer. In another execution herein, the anode conductor is provided with a supplementary layer of semi-conductor metal oxides before applying the photovoltaic ink. This supplementary layer is deposited by known means and is electronically interconnected with the anode conductor.
The photovoltaic cells manufactured in accordance with the method of this invention can be used beneficially for converting incident light into electrical energy. Visible light generally having a wave-length in the range of from 300 nms to 900 nms (nms = nanometer), preferably daylight having a wave-length in the range of from 400 nms to 700 nms are for obvious reasons prime sources of light. It is understood, however, that the cell in accordance with this invention can be manufactured and Correspondingly optimized with whatever source of light energy is available.

## Claims

1. A method for the manufacture of photovoltaic cell containing a substrate, current collectors, dye coated semi-conductor functional layer wherein a photovoltaic ink consisting essentially of a suspension of the dye coated particles of the semi-conductor functional layer, a hydrolyzable semi-conductor precursor, such as a hydrolyzable metal alkoxide, and an inert, in relation to the metal alkoxide, solvent, is applied to a substrate provided with conductor patterns to thereby generate, under temperature conditions not exceeding 180 °C, a semi-conductor functional layer.

2. The method in accordance with Claim 1 wherein the ink is deposited onto the substrate.

3. The method in accordance with Claim 1 wherein the metal in the metal alkoxide is selected from titanium, zirconium, hafnium, strontium, zinc, indium, yttrium, lanthanum, vanadium, niobium, tantalum, chrome, cadmium, antimony, tin molybdenum and tungsten or mixtures of these metal alkoxides.

4. The method in accordance with Claim 3 wherein, in addition, a further metal alkoxide is present selected from silicium, aluminum, germanium and boron in a level of from 10⁻⁶% to 10%, expressed in relation to the metal alkoxide (100%).

5. The method in accordance with Claim 1 wherein the particle is represented by inert, photochemically and electrically inactive within the context of this method, material, such as silica or alumina, coated with a semi-conductor functional layer comprising a metal oxide semi-conductor wherein the metal is selected from titanium, zirconium, hafnium, strontium, zinc, indium, yttrium, lanthanum, vanadium, niobium, tantalum, chrome, cadmium, antimony, tin molybdenum and tungsten or mixtures of these metals.

6. The method in accordance with Claim 1 wherein the substrate is selected from flexible or rigid, mineral or organic materials, such as synthetic and natural polymers and combinations thereof, paper, wood, glass, aluminum, tin, nickel, copper, cloth, fibers and mixtures thereof.

7. The method according to Claim 1 wherein the photovoltaic ink is deposited onto the substrate containing anode and cathode conductors to provide ohmic contact between the photovoltaic layer and the anode conductor to thus yield a single substrate cell or on an individual substrate provided with anode conductor to thus yield, in combination with another substrate provided with the cathode conductor, a sandwich-type cell.

8. The method according to Claim 7 wherein the anode conductor is provided with a supplementary layer of semi-conductor oxides before applying the photovoltaic ink.

9. The method according to Claim 7 wherein the anode conductor contains from 1% to 10% by weight, expressed versus the conductive material (100%), of semi-conductor metal oxide particles.
